# EUROPÄISCHE PATENTSCHRIFT

(11) **EP 0 902 341 B1**
(45) Veröffentlichungstag und Bekanntmachung des Hinweises auf die Patenterteilung: **27.03.2002**
(21) Anmeldenummer: 98116511.1
(22) Anmeldetag: 01.09.1998
(51) Int. Cl.: G05B 19/048, G05B 19/042

(54) **Verfahren und Schaltungsanordnung zur sicheren Ausführung von sicherheitsrelevanten Funktionen bei einer numerisch gesteuerten Werkzeugmaschine oder einem Roboter**
Method and circuit for safely executing safety relevant functions of a numerically controlled machine tool or a robot
Procédé et circuit pour exécuter fiablement des fonctions de sécurité d'une machine-outil à commande numérique ou d'un robot

(30) Priorität: 11.09.1997 DE 19739736
(43) Veröffentlichungstag der Anmeldung: 17.03.1999
(73) Patentinhaber: Dr. Johannes Heidenhain GmbH, 83292 Traunreut (DE)
(72) Erfinder: Kranitzky, Walter, 83278 Traunstein (DE)

(56) Entgegenhaltungen:
- EP-A- 0 658 832
- EP-A- 0 742 499

## Beschreibung

Die Erfindung betrifft ein Verfahren zur sicheren Ausführung von sicherheitsrelevanten Funktionen nach Anspruch 1 und eine Schaltungsanordnung zur Durchführung des Verfahrens nach Anspruch 4.

Aus DIN V VDE 0801 ist bekannt, daß strukturelle Maßnahmen zur Beherrschung von Fehlern auf Systemebene darin bestehen, daß Strukturen mindestens zweikanalig ausgeführt werden. Dabei weist eine zweikanalige Struktur zwei voneinander vollständig unabhängige Funktionseinheiten auf, um das Auftreten eines Fehlers erkennen und eine Fehlerbehandlung durchführen zu können.

Aus der EP 0 742 499 A2 ist ein Verfahren zum sicheren Verarbeiten von sicherheitsgerichteten Prozeßsignalen bekannt. Dabei werden Prozeßsignale an zwei unabhängige Rechner unabhängig voneinander übertragen, wodurch eine zweikanalige Struktur realisiert wird. In den zwei Rechnern werden die Prozeßsignale einer Eingangssignalverarbeitung unterzogen, wobei ein kreuzweiser Ergebnis- und Datenvergleich durchgeführt wird. Anschließend werden Ausgangssignale erzeugt, deren Daten und Ergebnisse ebenfalls kreuzweise verglichen werden. Im weiteren erfolgt eine Ausgangssignalverarbeitung, die ebenfalls einen kreuzweisen Daten- und Ergebnisvergleich beinhaltet. Mit den derart erhaltenen sicheren Ausgangssignalen auf beiden Kanälen werden sicherheitsrelevante Parameter eines Prozesses redundant angesteuert.

Dabei ist von Nachteil, daß für eine sichere Abarbeitung von NC-Sätzen Prozeßsignale über mindestens zwei unabhängige Kanäle der Steuerung zugeleitet werden müssen. Eine Abarbeitung von NC-Sätzen ist daher nicht möglich, da dabei keine zwei unabhängigen Prozeßsignale von Außen zugeleitet werden können, die Prozeßsignale werden nur in einem einzigen Prozessor erzeugt.

Aus der EP 0 658 832 A2 ist eine Einrichtung zur Steuerung mindestens eines Antriebs einer Werkzeugmaschine oder eines Roboters bekannt. Hierfür greifen am Antrieb zwei unterschiedliche Positionserfassungssysteme an, aus deren Ausgangssignalen die jeweilige Antriebsposition durch zwei unabhängige Prozessorsysteme gesondert bestimmt wird. Zusätzlich wird in jedem Prozessorsystem die Antriebsposition unabhängig auf Gleichheit und das Einhalten eines vorgebbaren Positionsbereichs überwacht.

Dabei ist von Nachteil, daß auch hier der Steuerung zwei unabhängige Signale zugeleitet werden müssen, um eine sichere Steuerung zu ermöglichen. Dies ist beispielsweise bei einer Abarbeitung von NC-Sätzen aber nicht möglich, da die Signale bei einer Abarbeitung von NC-Sätzen nur in einem einzigen Prozessor erzeugt werden, so daß auch hier keine sichere Abarbeitung von NC-Sätzen ermöglicht wird.

Aus dem vom Berufsgenossenschaftlichen Institut für Arbeitssicherheit (BIA) herausgegebenen BIA-Handbuch, 20. LFG., V/93, Nr. 330220, Kapitel "Elektronik in der Sicherheitstechnik" ist bekannt, daß eine Steuerungselektronik für einen Prozeß zur Erhöhung der Sicherheit redundant in einer zweikanafigen Struktur ausgeführt wird. Hierbei werden auch die Rückführungssignale zweikanalig an die beiden redundanten Steuerungseinheiten geleitet. Verschiedene Arten der Redundanz bei Maschinensteuerungen sind bereits aus dem BIA-Handbuch 10. Lfg. X/88 bekannt.

Weiterhin ist aus dem Buch "Mikrocomputer in der Sicherheitstechnik", von H. Hölscher und J. Rader, erschienen 1984 im Verlag TÜV Rheinland, bekannt, daß bei Bearbeitungsmaschinen Maßnahmen zur Gewährleistung eines sicheren Betriebs ergriffen werden. Diese bestehen darin, daß eine CPU-Überwachung durch eine doppelte CPU mit Hardware-Vergleich erfolgt und somit ein zweikanaliger Betrieb der beiden CPUs erfolgt.

Bei NC-Werkzeugmaschinen können Achsen bei geöffneter Schutztür des Bearbeitungsraums nur manuell durch Betätigen der Achsrichtungstasten oder mit Handrad und Zustimmtaste verfahren werden. Ein Abarbeiten von NC-Sätzen ist nicht möglich. Dadurch wird sichergestellt, daß die Achsen bei geöffneter Schutztür nur langsam mittels Achsrichtungstasten oder Handrad verfahren werden und ein Benutzer nicht verletzt werden kann. Zusätzlich sind Achsrichtungs- und Zustimmtaste zweikanalig ausgeführt, wodurch zwei unabhängige Rechner jede Achsbewegung auf die sogenannte sicher reduzierte Geschwindigkeit begrenzen. Weiterhin begrenzen nach Loslassen einer Taste beide Rechner unabhängig voneinander die Drehzahl auf Null, den sogenannten sicheren Betriebshalt. Durch die redundante Steuerung mittels zweier Rechner wird für den Benutzer bei geöffneter Schutztür ein sicherer Betrieb mit sicher reduzierter Geschwindigkeit gewährleistet.

Es stellt sich somit die Aufgabe, ein Verfahren und eine Schaltungsanordnung für eine Steuerung einer Werkzeugmaschine anzugeben, welches bei geöffneter Schutztür die sichere Abarbeitung eines oder mehrerer NC-Sätze bei sicher reduzierter Geschwindigkeit und mit anschließendem sicheren Betriebshalt wahlweise nach einem oder mehreren NC-Sätzen ermöglicht.

Diese Aufgabe wird durch die in Anspruch 1 und Anspruch 4 angegebenen Merkmale gelöst.

Das erfindungsgemäße Verfahren weist den Vorteil auf, daß zwei Rechner unabhängig voneinander nach der Abarbeitung eines oder mehrerer NC-Sätze den sicheren Betriebshalt redundant überwachen. Dadurch ist sichergestellt, daß auch bei einer Fehlfunktion in einem Rechner der zweite Rechner immer noch den sicheren Betriebshalt gewährleistet.

Die Erfindung wird im folgenden anhand der in der Zeichnung dargestellten Ausführungsformen näher erläutert. Es zeigt:

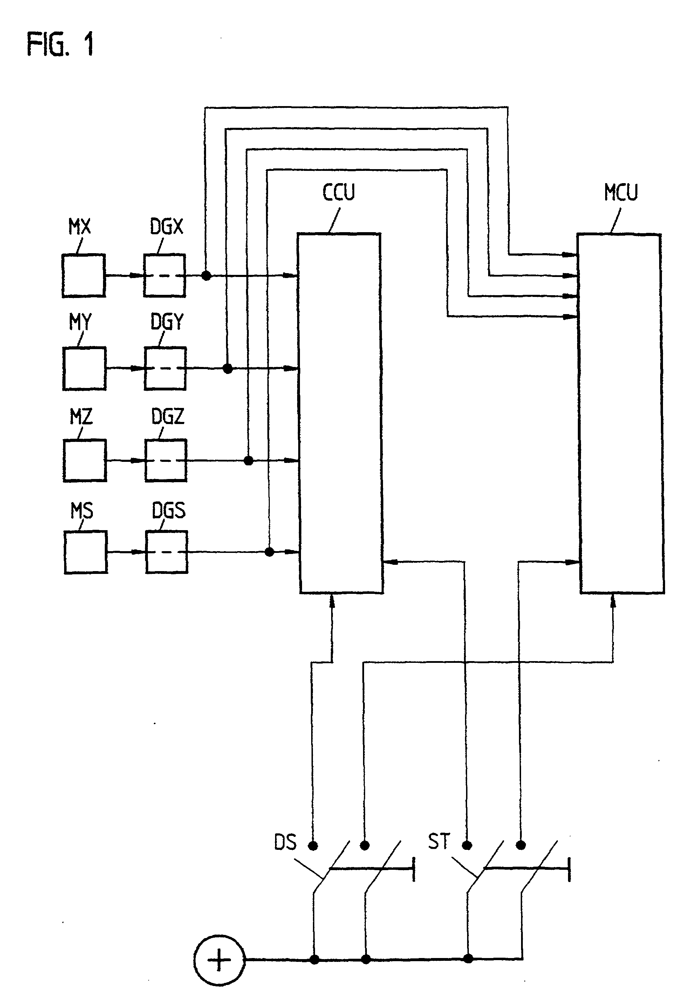

Fig. 1: eine mögliche Realisierungsform der erfindungsgemäßen Anordnung.

In Fig. 1 sind nur die für die Erfindung relevanten Baugruppen einer NC-Werkzeugmaschine exemplarisch dargestellt. Die NC-Werkzeugmaschine weist einen Rechner CCU auf, der beispielsweise zur Antriebs- und Drehzahlregelung der Achsantriebe MX, MY und MZ sowie des Spindelantriebs MS dient. Weiterhin ist ein Rechner MCU vorgesehen, der beispielsweise die Benutzeroberfläche, die Abarbeitung der NC-Sätze und die Lageregelung realisiert und überwacht. Die Aufteilung der Aufgaben auf die zwei oder mehreren Rechner kann beliebig je nach Leistungsfähigkeit der Rechner und den Anforderungen der jeweiligen Aufgabe erfolgen.

Außerdem weist die erfindungsgemäße Anordnung einen vom Bediener betätigbaren NC-Start Taster ST auf, durch den die Abarbeitung mindestens eines NC-Satzes gestartet werden kann. Dieser ist zweikanalig ausgeführt, das heißt mit beiden Rechnern MCU und CCU ist je ein Kanal verbunden. Exemplarisch wird davon ausgegangen, daß das Öffnen und Schließen einer Schutztür zum Bearbeitungsraum einer Werkzeugmaschine detektiert werden soll. Zur Detektion, ob die Schutztüre des Bearbeitungsraums der NC-Werkzeugmaschine geöffnet ist, wird ein Detektor DS vorgesehen. Dieser ist ebenfalls zweikanalig ausgeführt, so daß sowohl dem Rechner CCU als auch dem Rechner MCU der Status der Schutztür (offen oder geschlossen) signalisiert wird. Im folgenden wird davon ausgegangen, daß der Detektor DS als zweikanaliger Taster an einer Schutztür realisiert ist, prinzipiell ist jedoch jeder Detektor möglich, der ein mögliches Eindringen des Benutzers in den Bearbeitungsraum detektieren kann, also beispielsweise auch entsprechend installierte Personenmelder oder Lichtschranken.

Zusätzlich sind die Motoren MX, MY, MZ und MS für den Antrieb der Achsen sowie der Spindel dargestellt. In diese Motoren MX, MY, MZ und MS ist jeweils ein Drehgeber baulich integriert, der in der Figur für die Achsen und die Spindel mit DGX, DGY, DGZ und DGS bezeichnet wird und zur besseren Erläuterung extern gezeichnet wurde. Dieser kann ein- oder mehrkanalig ausgestaltet sein. Je ein Ausgangssignal eines zweikanaligen Drehgebers DGX, DGY, DGZ und DGS wird an den Rechner CCU und MCU ausgegeben. Dieses Ausgangssignal signalisiert, ob sich der zugehörige Motor noch dreht oder still steht. Bei einer einkanaligen Ausführung der Drehgeber wird an beide Rechner das gleiche Ausgangssignal auf unterschiedlichen Leitungen weitergeleitet.

Will nun der Benutzer, beispielsweise zu Testzwecken, bei geöffneter Schutztür, bzw. wenn sich der Bediener nahe dem Arbeitsraum befindet einen einzelnen NC-Satz ausführen, so wählt er diesen NC-Satz auf der Bedieneroberfläche mit einem Auswahlmittel, beispielsweise einem Cursor, aus und drückt den NC-Start Taster ST. Dessen Ausgangssignal und das Ausgangssignal des Detektors DS, der eine offene Schutztüre erkennt, wird beiden Rechnern MCU, der im vorliegenden Ausführungsbeispiel die NC-Satzabarbeitung durchführt und CCU, der hier die Drehzahlregelung durchführt, zugeleitet, so daß eine zweikanalige Überwachung sichergestellt ist. Dadurch wird der bisherige Betriebszustand sicherer Betriebshalt in beiden Rechnern geändert in den Betriebszustand sicher reduzierte Geschwindigkeit. Weiterhin beginnt der Rechner MCU mit der Abarbeitung des ausgewählten NC-Satzes.

NC-Sätze benötigen zum einen sehr unterschiedliche Zeitdauern für ihre Ausführung. Zum anderen ist nur dem Rechner MCU, der die NC-Sätze abarbeitet und gleichzeitig die Lageregelung durchführt, bekannt, ob der ausgewählte NC-Satz bereits abgearbeitet wurde. Daher erhält der Rechner CCU, der die Antriebs- und Drehzahlregelung durchführt, keine vom Rechner MCU unabhängigen Informationen darüber, wann die Abarbeitung eines NC-Satzes beendet wurde und wann wieder in den Betriebszustand sicherer Betriebshalt umzuschalten ist. Aufgrund der vorhandenen Informationen kann daher nur im Rechner MCU von sicher reduzierter Geschwindigkeit auf sicheren Betriebshalt umgeschaltet werden. Aufgrund der im Rechner MCU durchgeführten Abarbeitung der NC-Sätze und der Lageregelung hat dieser Informationen zur Soll-Position der Achsen der Werkzeugmaschine und der Spindel sowie der Spindeldrehzahl gespeichert. Zusätzlich werden dem Rechner MCU Informationen zur Ist-Position der Achsen sowie der Spindel und deren Drehzahl für die Lageregelung zugeleitet. Dadurch wird der erste Kanal zur Überwachung der Motoren MX, MY, MZ und MS gebildet.

Um eine zweikanalige Überwachung eines sicheren Betriebshalts zu gewährleisten, ist es jedoch erforderlich, daß auch der Rechner CCU - redundant zum Rechner MCU - unabhängige Informationen über das Ende der Abarbeitung des ausgewählten NC-Satzes erhält. Hierfür wird die Drehzahl der Motoren aller Achsen der NC-Werkzeugmaschine dem Rechner CCU zugeleitet, der durch Auswertung der Drehzahlinformationen auch einen Stillstand erkennt und überwachen kann. Sobald der Rechner CCU aufgrund der durch die Drehgeber DGX, DGY, DGZ und DGS zugeleiteten Drehzahlinformation für alle Motoren MX, MY, MZ und MS die Drehzahl Null detektiert, ist sichergestellt, daß im Arbeitsraum keine Bewegung der Maschine mehr erfolgt. Es kann davon ausgegangen werden, daß der jeweilige NC-Satz vollständig abgearbeitet wurde, sobald für eine Mindestzeit To dem Rechner CCU ebenso wie dem Rechner MCU alle Drehgeber DGX, DGY, DGZ und DGS Drehzahl Null signalisieren. Nach dieser Mindestzeit To überwachen daher beide Rechner CCU und MCU wieder den Betriebszustand sicherer Betriebshalt.

Dadurch wird ein vom ersten Kanal vollständig unabhängiger zweiter Kanal, bestehend aus unabhängigen Drehgebern DGX, DGY, DGZ sowie DGS und unabhängigem Rechner CCU, zusätzlich zum bisher benutzten Kanal realisiert. Dieser besteht, wie bereits erläutert, aus dem Rechner MCU und der Drehzahlerfassung mittels der Drehgeber DGX, DGY, DGZ und DGS. Dabei kann bei einer zweikanaligen Ausführung jedes Drehgebers DGX, DGY, DGZ, DGS für jeden Rechner ein anderer Kanal benutzt werden. Aufgrund der derart geschaffenen Redundanz wird ein Abarbeiten einzelner NC-Sätze mit sicher reduzierter Geschwindigkeit mit anschließendem sicheren Betriebshalt ermöglicht, auch wenn der Benutzer die Möglichkeit hat, daß er in den Arbeitsraum eingreifen kann. Weiterhin wird sichergestellt, daß der sichere Betriebshalt durch zwei Rechner redundant überwacht wird.

Der Benutzer hat weiterhin die Möglichkeit nicht nur einen, sondern mehrere NC-Sätze, NC-Zyklen oder ganze NC-Programme zu markieren, die dann, wie oben beschrieben, auch bei geöffneter Schutztür mit sicher reduzierter Geschwindigkeit und anschließendem sicheren Betriebshalt ausgeführt werden.

## Patentansprüche

1. Verfahren zur sicheren Ausführung von sicherheitsrelevanten Funktionen bei einer Werkzeugmaschine oder einem Roboter, bei dem eine Steuereinrichtung mindestens zwei Prozessorsysteme (MCU, CCU) aufweist, von denen ein erstes Prozessorsystem (MCU) vorzugsweise die Programmabarbeitung und die Lageregelung und ein zweites Prozessorsystem (CCU) vorzugsweise die Drehzahl- und Antriebsregelung durchführt, bei dem durch einen mindestens zweikanaligen Detektor (DS) die Möglichkeit des Benutzers in den Arbeitsraum der Maschine einzugreifen sicher erkannt wird und danach durch die Steuerung sicherheitsrelevante Funktionen redundant überwacht werden, **dadurch gekennzeichnet, daß** das Ausgangssignal eines benutzerbetätigten, mindestens zweikanaligen NC-Start Tasters (ST) beiden Prozessorsystemen (MCU, CCU) zugeleitet wird, daß beide Prozessorsysteme vom Betriebszustand sicherer Betriebshalt auf sicher reduzierte Geschwindigkeit zur Abarbeitung mindestens eines NC-Satzes umschalten, daß das erste Prozessorsystem (MCU) entweder aufgrund interner Informationen oder aufgrund zugeleiteter Informationen selbständig erkennt, wann die Abarbeitung eines NC-Satzes beendet wurde und dann wieder den Betriebszustand sicherer Betriebshalt überwacht und daß das zweite Prozessorsystem (CCU) die Drehzahl der Achsantriebe (MX, MY, MZ) überwacht und nach einer Mindestzeit, während der Drehzahl Null bei allen Achsantrieben (MX,MY,MZ) detektiert wurde, ebenfalls den sicheren Betriebshalt überwacht.

2. Verfahren nach Anspruch 1, **dadurch gekennzeichnet, daß** das erste Prozessorsystem (MCU) den Betriebszustand sicherer Betriebshalt überwacht, wenn für eine Mindestzeit Stillstand aller Motoren (MX, MY, MZ) erkannt wurde.

3. Verfahren nach Anspruch 1 oder 2, **dadurch gekennzeichnet, daß** beide Prozessorsysteme (MCU, CCU) zusätzlich die Drehzahl des Spindelmotors (MS) überwachen und erst dann sicheren Betriebshalt durch beide Prozessorsysteme (MCU, CCU) überwacht wird, wenn auch der Spindelmotor (MS) für eine Mindestzeit Drehzahl Null aufweist.

4. Anordnung zur sicheren Ausführung von sicherheitsrelevanten Funktionen bei einer Werkzeugmaschine oder einem Roboter, bei dem eine Steuereinrichtung mindestens zwei Prozessorsysteme (MCU, CCU) aufweist, von denen ein erstes Prozessorsystem (MCU) vorzugsweise die Programmabarbeitung und die Lageregelung und ein zweites Prozessorsystem (CCU) vorzugsweise die Drehzahl- und Antriebsregelung durchführt und bei dem ein Detektor (DS) mittels mindestens zweier Taster das Öffnen einer Schutztür des Arbeitsraums unabhängig an beide Prozessorsysteme (MCU, CCU) weiterleitet, **dadurch gekennzeichnet, daß** ein NC-Start Taster (ST) mindestens aus zwei gekoppelten Tastern besteht, und unabhängig mit beiden Prozessorsystemen (MCU, CCU) verbunden ist, daß beide Prozessorsysteme (MCU, CCU) zur Drehzahlermittlung unabhängig voneinander mit Drehgebern (DGX, DGY, DGZ) für jeden Achsmotor (MX, MY, MZ) verbunden sind, und daß beide Prozessorsysteme (CCU, MCU) mit jeweils einer Zeiterfassungsbaugruppe verbunden sind, deren Ausgangssignal mit den Ausgangssignalen der Drehgeber (DGX, DGY, DGZ) logisch verknüpft werden.

5. Anordnung nach Anspruch 4, **dadurch gekennzeichnet, daß** beide Prozessorsysteme (MCU, CCU) zusätzlich mit einem Drehgeber (DGS) für den Spindelmotor (MS) verbunden sind.

## Claims

1. Method for safe execution of safety-relevant functions of a machine tool or of a robot, in which a control device has at least two processor systems (MCU, CCU), of which a first processor system (MCU) preferably carries out the programme operation and the position control and a second processor system (CCU) preferably carries out the speed- and drive control, in which by means of one detector (DS), which has at least two channels, the possibility of the user intervening in the working area of the machine is reliably detected and thereafter, by means of the control, safety-relevant functions are redundantly monitored, **characterised in that** the output signal of a user-operated NC-start switch (ST) which has a least two channels is supplied to both processor systems (MCU, CCU), **in that** both processor systems change over from the operational state, safe operational stoppage, to safely reduced speed for operation of at least one NC sentence, **in that** the first processor system (MCU) independently detects, either because of internal information or because of transmitted information, when the operation of an NC sentence has been completed and then again monitors the operational state, safe operational stoppage, and **in that** the second processor system (CCU) monitors the speed of the axle drives (MX, MY, MZ) and after a minimum time during which zero speed of all axle drives (MX, MY, MZ) was detected, likewise monitors the safe operational stoppage.

2. Method according to claim 1, **characterised in that** the first processor system (MCU) monitors the operational state, safe operational stoppage, when stoppage of all motors (MX, MY, MZ) has been detected for a minimum time.

3. Method according to claim 1 or 2, **characterised in that** both processor systems (MCU, CCU) monitor additionally the speed of the spindle motor (MS) and safe operational stoppage is monitored by means of both processor systems (MCU, CCU), only when the spindle motor (MS) also has zero speed for a minimum time.

4. Arrangement for safe execution of safety-relevant functions of a machine tool or of a robot, in which a control device has at least two processor systems (MCU, CCU), of which a first processor system (MCU) preferably carries out the programme operation and the position control and a second processor system (CCU) preferably carries out the speed- and drive control and in which a detector (DS), by means of at least two switches, transmits the opening of a security door of the working area independently to both processor systems (MCU, CCU), **characterised in that** an NC-start switch (ST) comprises at least two coupled switches and is connected independently to both processor systems (MCU, CCU), **in that**, in order to determine speed, both processor systems (MCU, CCU) are connected independently of each other to shaft encoders (DGX, DGY, DGZ) for each axle motor (MX, MY, MZ) and **in that** both processor systems (CCU, MCU) are connected respectively to a time detection subassembly, the output signals of which are logically linked with the output signals of the shaft encoders (DGX, DGY, DGZ).

5. Arrangement according to claim 4, **characterised in that** both processor systems (MCU, CCU) are connected additionally to a shaft encoder (DGS) for the spindle motor (MS).

## Revendications

1. Procédé pour exécuter de manière fiable des fonctions de sécurité sur une machine-outil ou sur un robot, dans lequel un dispositif de commande comporte au moins deux ensembles processeurs (MCU, CCU), parmi lesquels un premier ensemble processeur (MCU) est chargé de préférence de l'exécution du programme et du réglage de la position et un second ensemble processeur (CCU) est chargé de préférence de la régulation de la vitesse de rotation et de la régulation de l'entraînement, dans lequel une intervention éventuelle d'un utilisateur dans l'espace de travail de la machine est détectée par un détecteur (DS) à au moins deux canaux et ainsi des fonctions de sécurité sont surveillées de manière redondante par la commande, **caractérisé en ce que** le signal de sortie d'un contacteur de démarrage de commande numérique (ST) à au moins deux canaux actionné par l'utilisateur est transmis aux deux ensembles processeurs (MCU, CCU), **en ce que** les deux ensembles processeurs commutent de l'état de fonctionnement arrêt de sécurité à l'état de fonctionnement vitesse réduite stable pour le déroulement d'au moins un jeu de commandes numériques, **en ce que** le premier ensemble processeur (MCU), soit sur la base d'informations internes, soit sur la base d'informations introduites, détecte de façon autonome l'instant auquel le traitement du jeu de commandes numériques est terminé et ensuite surveille de nouveau l'état de fonctionnement arrêt de sécurité et **en ce que** le second ensemble processeur (CCU) surveille la vitesse de rotation des entraînements des axes (MX, MY, MZ) et après un laps de temps minimal, pendant lequel la vitesse de rotation zéro a été détectée au niveau de tous les axes (MX, MY, MZ), surveille également l'état de fonctionnement arrêt de sécurité.

2. Procédé selon la revendication 1, **caractérisé en ce que** le premier ensemble processeur (MCU) surveille l'état de fonctionnement arrêt de sécurité, lorsque l'arrêt de tous les moteurs (MX, MY, MZ) a été détecté pendant un laps de temps minimal.

3. Procédé selon la revendication 1 ou 2, **caractérisé en ce que** les deux ensembles processeurs (MCU, CCU) surveillent en plus la vitesse de rotation du moteur de broche (MS) et que l'arrêt de sécurité n'est surveillé par les deux ensembles processeurs (MCU, CCU) que lorsque le moteur de broche (MS) présente lui aussi une vitesse de rotation nulle pendant un laps de temps minimal.

4. Dispositif pour exécuter de manière fiable des fonctions de sécurité sur une machine-outil ou sur un robot, dans lequel un dispositif de commande comporte au moins deux ensembles processeurs (MCU, CCU), parmi lesquels un premier ensemble processeur (MCU) est chargé de préférence de l'exécution du programme et du réglage de la position et un second ensemble processeur (CCU) est chargé de préférence de la régulation de la vitesse de rotation et de la régulation de l'entraînement, et dans lequel un détecteur (DS) transmet à l'aide d'au moins deux contacteurs l'ouverture d'une porte de protection de l'espace de travail de façon indépendante aux deux ensembles processeurs (MCU, CCU), **caractérisé en ce qu'**un contacteur de démarrage de commande numérique (ST) est composé d'au moins deux contacteurs couplés et est connecté de façon indépendante aux deux ensembles processeurs (MCU, CCU), **en ce que** les deux ensembles processeurs (MCU, CCU), en vue de la détermination de la vitesse de rotation, sont connectés de façon indépendante l'un de l'autre à des détecteurs de rotation (DGX, DGY, DGZ) pour chaque moteur d'axe (MX, MY, MZ), et **en ce que** les deux ensembles processeurs (MCU, CCU) sont connectés chacun à une unité de détermination de temps dont le signal de sortie est combiné de façon logique avec les signaux de sortie des détecteurs de rotation (DGX, DGY, DGZ).

5. Dispositif selon la revendication 4, **caractérisé en ce que** les deux ensembles processeurs (MCU, CCU) sont en plus connectés à un détecteur de rotation (DGS) pour le moteur de broche (MS).
